# EUROPEAN PATENT APPLICATION

(11) **EP 4 488 235 A1**
(43) Date of publication of application: **08.01.2025**
(21) Application number: 23841721.6
(22) Date of filing: 14.02.2023
(51) Int. Cl.: C01G 53/00, H01M 4/525, H01M 4/505, H01M 4/04, H01M 4/131, H01M 10/0525

(54) **POSITIVE ELECTRODE ACTIVE MATERIAL, POSITIVE ELECTRODE SLURRY, POSITIVE ELECTRODE SHEET, AND SECONDARY BATTERY**

(30) Priority: 22.07.2022 CN 202210871328
(71) Applicant: Ningbo Ronbay New Energy Technology Co., Ltd., Yuyao Ningbo, Zhejiang 315402 (CN)
(72) Inventor: YE, Yukai, Ningbo, Zhejiang 315402 (CN); HUANG, Xiaoxiao, Ningbo, Zhejiang 315402 (CN); WANG, Biwu, Ningbo, Zhejiang 315402 (CN); YU, Jian, Ningbo, Zhejiang 315402 (CN)
(74) Representative: Bandpay & Greuter
(86) International application number: PCT/CN2023/075874
(87) International publication number: WO 2024/016643

(57) **Abstract**

The present application relates to the technical field of batteries, in particular to a positive electrode active material, a positive electrode slurry, a positive electrode sheet and a secondary battery. In a DSC graph of the positive electrode active material, an exothermic peak is present between 200-250 °C; at an onset temperature t1 of the exothermic peak, the proportion of cracked secondary particles in the positive electrode active material is x1; and at a peak temperature T1 of the exothermic peak, the proportion of cracked secondary particles in the positive electrode active material is X1, where the proportion of cracked secondary particles is a ratio of the number of the cracked secondary particles to the number of all secondary particles in the positive electrode active material, 0% ≤ x1 ≤ 5%, 0% ≤ X1 ≤ 10%, 0% ≤ X1-x1 ≤ 5%. The degree of cracking of secondary particles in the positive electrode active material is low, this avoid an increase in the contact area between an electrolyte solution and the positive electrode active material due to excessive cracking of the positive electrode active material, thereby reducing the risk of side reactions between the electrolyte solution and the positive electrode active material.

## Description

### CROSS-REFERENCE TO RELATED APPLICATION

This application claims priority to Chinese Patent Application No. 202210871328.5, filed with the China National Intellectual Property Administration (CNIPA) on July 22, 2022, entitled with "POSITIVE ELECTRODE ACTIVE MATERIAL, POSITIVE ELECTRODE SLURRY, POSITIVE ELECTRODE SHEET AND SECONDARY BATTERY", which is hereby incorporated by reference in its entirety.

### TECHNICAL FIELD

The present application relate to the technical field of batteries, in particular to a positive electrode active material, a positive electrode slurry, a positive electrode sheet and a secondary battery.

### BACKGROUND

Secondary batteries, such as lithium ion batteries, have been more and more widely used due to their high energy density, low cost and long life. One of the key factors determining the electrochemical performance of lithium ion batteries is the positive electrode material, and thus the continuous optimization and improvement of the positive electrode material is particularly important.

Ternary positive electrode materials have become one of the most commercially valuable lithium ion positive electrode materials because of their better overall performance of reversibility, discharge capacity, charging efficiency, etc. However, ternary positive electrode materials still have the problem of low thermal safety. Thus, it is of great significance to develop positive electrode materials with high thermal safety in its popularization and application.

### SUMMARY

The present application discloses a positive electrode active material, a positive electrode slurry, a positive electrode sheet, and a secondary battery, to solve the problem of low thermal safety of the existing positive electrode active materials.

In order to achieve the above purpose, the present application provides the following technical solutions.

In a first aspect, the present application provides a positive electrode active material. In a DSC graph of the positive electrode active material, an exothermic peak is present between 200-250 °C; at an onset temperature t1 of the exothermic peak, a proportion of cracked secondary particles in the positive electrode active material is x1; and at a peak temperature T1 of the exothermic peak, the proportion of cracked secondary particles in the positive electrode active material is X1, where the proportion of the cracked secondary particles is a ratio of the number of the cracked secondary particles to the number of all secondary particles in the positive electrode active material, 0% ≤ x1 ≤ 5%, 0% ≤ X1 ≤ 10%, 0% ≤ X1-x1 ≤ 5%.

Further, at the temperature of t2, the proportion of cracked secondary particles in the positive active material is y1, where t2 = t1+5, 0% ≤ y1-x1 ≤ 4%.

Further, at the temperature of T2, the proportion of cracked secondary particles in the positive active material is Y1, where T2 = T1+5, 0% ≤ Y1-X1 ≤ 6%.

Further, at the temperature of T3, the proportion of cracked secondary particles in the positive active material is Y2, where T3 = T 1 + 1 0, 0% ≤ Y2 ≤ 15%, 0% ≤ Y2-X1 ≤ 8%.

Further, the positive electrode active material has a general formula of Li₁₊ₐ[NiₓCo_{y}M_{z}M_{1b}]O₂, 0.5≤x<1, 0<y<0.3, 0<z<0.3, 0<a<0.2, 0<b<0.2, and x+y+z+b = 1; where M is one or both of Mn or Al; M1 is one or a combination of at least two of Zr, Mg, Ti, Te, Al, Ca, Sr, Sb, Nb, Pb, V, Ge, Se, W, Mo, Zn, Ce, or Y

Further, the positive electrode active material further includes a coating layer, the coating layer is an ionic conductor layer, and the ionic conductor layer is a metallic lithium compound or a non-metallic lithium compound.

Further, the secondary particles of the positive electrode active material have an average particle size of 10 - 20 um.

In a second aspect, the present application provides a positive electrode slurry, the positive electrode slurry includes the positive electrode active material of the first aspect, and a conductive agent, a bonding agent and a solvent.

In a third aspect, the present application provides a positive electrode sheet, the positive electrode sheet includes a positive electrode current collector and a positive electrode material layer disposed on the positive electrode current collector, the positive electrode material layer includes the positive electrode active material of the first aspect, or is prepared by coating the positive electrode slurry of the second aspect.

In a fourth aspect, the present application provides a secondary battery, the secondary battery includes the positive electrode sheet of the third aspect, and a negative electrode sheet, an electrolyte provided between the positive electrode sheet and the negative electrode sheet.

The technical solutions of the present application give the beneficial effects as follows.

In the DSC graph of the positive electrode active material provided in the present application, an exothermic peak is present between 200-250°C; at an onset temperature t1 of the exothermic peak, the proportion of cracked secondary particles in the positive electrode active material is not more than 5%; at the peak temperature T1 of the exothermic peak, the proportion of cracked secondary particles in the positive electrode active material is not more than 10%; and from the inset to the peak temperatures of the exothermic peak, the proportion of cracked secondary particles in the positive electrode active material increases by not more than 5%. Therefore, at both the onset temperature and the peak temperature of the exothermic peak, the cracking degree of secondary particles in the positive electrode active material is low, and from the onset temperature to the peak temperature of the exothermic peak, the cracking degree of secondary particles in the positive electrode active material only slightly increases. This avoids an increase in the contact area between the electrolyte solution and the positive electrode active material due to excessive cracking of the positive electrode active material, thereby decreasing the risk of side reactions between the electrolyte solution and the positive electrode active material. Therefore, the thermal safety of the positive electrode active material in this application is high.

### BRIEF DESCRIPTION OF DRAWINGS

FIG. 1 is a DSC diagram of a positive active material provided in Example 5 of this application;
FIG. 2 is a DSC diagram of a positive active material provided in Example 9 of this application.

### DESCRIPTION OF EMBODIMENTS

To make the objectives, technical solutions, and advantages of embodiments of the present application clearer, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by persons of ordinary skill in the art based on embodiments of the present application without creative effort shall fall within the protection scope of the present application.

The application scenarios described in the embodiments of the present application are for the purpose of more clearly illustrating the technical solutions of the embodiments of the present application, and do not constitute a limitation of the technical solutions provided by the embodiments of the present application. Persons of ordinary skill in the art know that, with the emergence of new application scenarios, the technical solutions provided by the embodiments of the present application are also applicable to similar technical problems. Where, in the description of the present application, unless otherwise specified, "more than one" means two or more.

Currently, secondary batteries, such as lithium ion batteries, are widely used in fields such as unmanned aerial vehicles and electric vehicles. With the rapid development of the electronics industry, the requirements of consumers for the safety performance of electric vehicles have gradually become more stringent. Therefore, secondary batteries with higher safety are needed to meet the electric demand of electric vehicles. In particular, ternary positive electrode materials have become one of the most widely used lithium ion positive electrode materials due to their high energy density and relatively low cost. Since the thermal safety of ternary positive electrode materials is not high enough, there is an urgent need for a positive electrode material with high thermal safety to meet the growing requirements of people.

In view of this, embodiments of the present application provide a positive electrode active material. In a DSC (differential scanning calorimetry) graph of the positive electrode active material, an exothermic peak is present between 200-250 °C; at an onset temperature t1 of the exothermic peak, the proportion of cracked secondary particles in the positive electrode active material is x1; and at a peak temperature T1 of the exothermic peak, the proportion of cracked secondary particles in the positive electrode active material is X1, wherein the proportion of the cracked secondary particles is a ratio of the number of the cracked secondary particles to the number of all the secondary particles in the positive electrode active material, 0% ≤ x1 ≤ 5%, 0% ≤ X1 ≤ 10%, 0% ≤ X1-x1 ≤ 5%.

In one embodiment of the present application, at the temperature of t2, the proportion of cracked secondary particles in the positive active material is y1, where t2 = t1+5, 0% ≤ y1-x1 ≤ 4%. After the onset temperature of the exothermic peak rises 5°C from t1 to t2, the proportion of the cracked secondary particles in the positive electrode material increases by no more than 4%, indicating that the positive electrode active material can maintain thermochemical stability in a higher temperature range, thus reducing the probability of side reactions between an electrolyte solution and the positive electrode active material, and delaying the occurrence of danger.

In one embodiment of the present application, at the temperature of T2, the proportion of cracked secondary particles in the positive active material is Y1, where T2 = T1+5, 0% ≤ Y1-X1 ≤ 6%. After the peak temperature of the exothermic peak rises 5° C from T1 to T2, the proportion of cracked secondary particles in the positive electrode material increases by no more than 6%, indicating that the positive electrode active material can maintain thermochemical stability in a higher temperature range, thus reducing the probability of side reactions between the electrolyte solution and the positive electrode active material, and delaying the occurrence of danger.

In one embodiment of the present application, at the temperature of T3, the proportion of cracked secondary particles in the positive active material is Y2, where T3 = T1+10, 0% ≤ Y2 ≤ 15%, 0% ≤ Y2-X1 ≤ 8%. At the temperature of T3, the proportion of cracked secondary particles in the positive electrode material does not exceed 15%, and after the peak temperature of the exothermic peak rises 10°C from T1 to T3, the proportion of cracked secondary particles in the positive electrode material increases by no more than 8%, indicating that the positive electrode active material can maintain thermochemical stability in a higher temperature range, thus reducing the probability of side reactions between the electrolyte solution and the positive electrode active material, and delaying the occurrence of danger.

In one embodiment of the present application, the general formula of the positive electrode active material is Li₁₊ₐ[NiₓCo_{y}M_{z}M_{1b}]O₂, 0.5 ≤ x < 1, 0 < y < 0.3, 0 < z < 0.3, 0 < a < 0.2, 0 < b < 0.2, and x+y+z+b = 1; where M is one or both of Mn or Al; M₁ is one or a combination of at least two of Zr, Mg, Ti, Te, Al, Ca, Sr, Sb, Nb, Pb, V, Ge, Se, W, Mo, Zn, Ce, or Y M₁ is preferably one or a combination of at least two of Zr, Mg, Ti, Al, Sr, Nb, W, or Mo. By doping the above metal elements in the positive electrode active material, the disorder of crystal lattices is reduced, the volume change in the redox process is suppressed, and the doped ions have the effect of "column ions", which can maintain a good layered structure. This improves the structural stability of the positive electrode active material in the charging and discharging behaviors, thus enhancing the thermal safety of the positive electrode active material.

The general formula of the positive electrode active material in an embodiment of this application is Li₁₊ₐ[NiₓCo_{y}M_{z}M_{1b}]O₂, where 0.5 ≤ x < 1, such as 0.5, 0.6, 0.7, 0.8, 0.9, or 0.99, but not limited to the listed values, other values in the value range are also applicable. Where 0 < y < 0.3, such as 0.05, 0.1, 0.15, 0.2, 0.25 or 0.29, but not limited to the listed values, other values in the value range are also applicable. Where 0 < z < 0.3, such as 0.05, 0.1, 0.15, 0.2, 0.25 or 0.29, but not limited to the listed values, other values in the value range are also applicable. Where 0 < a < 0.2, such as 0.02, 0.05, 0.08, 0.1, 0.12, 0.15 or 0.19, but not limited to the listed values, other values in the value range are also applicable. Where 0 < b < 0.2, such as 0.02, 0.05, 0.08, 0.1, 0.12, 0.15 or 0.19, but not limited to the listed values, other values in the value range are also applicable.

It should be noted that the general formula of the positive electrode active material is not limited in the present application, and the above is only a possible general formula of the positive electrode active material.

In one embodiment of the present application, the positive electrode active material further includes a coating layer, the coating layer is an ionic conductor layer, and the ionic conductor layer is a metallic lithium compound or a non-metallic lithium compound. When the coating layer is a metallic lithium compound, the coating layer can be one or a combination of at least two of lithium iron phosphate, lithium cobaltate, lithium nickel-cobalt-manganese material (the molar content of nickel is <60%), lithium manganate, lithium nickelate, lithium titanate, lithium titanium aluminum phosphate, lithium lanthanum titanate, lithium lanthanum tantalate, lithium aluminum germanium phosphate, lithium lanthanum zirconium oxygen, lanthanum zirconium aluminium lithium oxygen, niobium-doped lithium lanthanum zirconium oxygen or tantalum-doped lithium lanthanum zirconium oxygen; when the coating layer is a non-metallic lithium compound, the coating layer can be one or a combination of at least two of lithium boron compound, lithium sulfur compound or lithium phosphorus compound.

The coating layer of the positive electrode active material in the embodiments of the present application has high chemical stability within an operating voltage range, and has a high redox potential to act as a "buffer" layer to inhibit side reactions between the positive electrode active material and the electrolyte solution. In addition, the coating layer has lithium ion rapid diffusion channels, which cannot affect the capacity performance of the positive electrode material.

In one embodiment of the present application, secondary particles of the positive electrode active material have an average particle size of 10 - 20 um. The positive electrode material including secondary particles having a particle size in the above range has a high compaction density, which can maximize the capacity performance of the positive electrode material after the positive electrode material is rolled into an electrode sheet, and will not cause the particles to break to decrease the thermal safety. The average particle size of the secondary particles is typically, but not limited to, 10µm, 11µm, 12µm, 13µm, 14µm, 15µm, 16µm, 17µm, 18µm, 19µm, or 20µm.

Based on the same inventive concept, an embodiment of the present application provides a positive electrode slurry, and the positive electrode slurry includes the positive electrode active material of the present application, and a conductive agent, a bonding agent and a solvent.

The positive electrode slurry provided in the embodiment of the present application has a high thermal safety due to the inclusion of the positive electrode active material of the embodiments of the present application in the positive electrode slurry.

Based on the same inventive concept, an embodiment of the present application also provides a positive electrode sheet, and the positive electrode sheet includes a positive electrode current collector and a positive electrode material layer disposed on the positive electrode current collector, the positive electrode material layer includes the positive electrode active material of the present application, or is prepared by coating the positive electrode slurry of the present application.

It will be appreciated that the positive electrode sheet of embodiments of the present application may be applied in a variety of single-ion battery systems, such as lithium ion batteries, sodium-ion batteries, potassium-ion batteries, magnesium-ion batteries, calcium-ion batteries, or aluminum-ion batteries, depending on the type of the selected positive electrode active material.

The positive electrode sheet provided in the embodiments of the present application has the advantage of good safety due to the inclusion of the positive electrode active material of the embodiments of the present application in the positive electrode material layer of the positive electrode sheet.

Based on the same inventive concept, embodiments of the present application also provide a secondary battery, the secondary battery includes a positive electrode sheet, a negative electrode sheet, and an electrolyte provided between the positive electrode sheet and the negative electrode sheet. Where the positive electrode sheet may be a positive electrode sheet provided in various possible embodiments of the present application.

Regarding the secondary battery provided in the present application, since it includes the positive electrode sheet of the present application, in the case that the positive electrode sheet of the present application has a high thermal safety, the secondary battery of the present application can obtain a better safety.

It can be understood that the secondary battery of the present application can be a lithium ion battery, a sodium ion battery, a potassium ion battery, a magnesium ion battery, or a calcium ion battery, etc., and there is no limitation on the type of the specific secondary battery, as long as it can be assembled into a secondary battery by utilizing the positive electrode sheet of the present application.

In combination with specific examples and comparative examples, the following will further explain in detail the positive electrode active material and the secondary battery containing the positive electrode active material in the present application.

### Example 1

The example is a positive electrode active material and a secondary battery prepared by applying the positive electrode active material, a matrix material thereof is Li Ni_{0.8}Co_{0.1}Mn_{0.1}O₂, M₁ is compounds of Al, Zr, Nb, Mo, and Ti, with a doping amount of 1.5%, 0.5%, 0.125%, 0.125%, 0.125%, respectively, and a coating layer is a lithium boron compound.

### Examples 2-9 and Comparative Examples 1-2

Each of Examples 2-9 and Comparative Examples 1-2 is a positive electrode active material and a secondary battery prepared by applying the positive electrode active material respectively, the structure thereof can be referred to Example 1, and the distinction lies in that the matrix materials, doping elements and coating layers are different, and the specific components are listed in table 1.

**Table 1**

| No. | Matrix material | Doping element | Coating layer |
|---|---|---|---|
| Example 1 | LiNi_{0.8}Co_{0.1}Mn_{0.1}O₂ | compounds of Al, Zr, Nb, Mo, and Ti, with a doping amount of 1.5%, 0.5%, 0.125%, 0.125%, 0.125%, respectively | lithium boron compound |
| Example 2 | LiNi_{0.8}Co_{0.1}Mn_{0.1}O₂ | compounds of Al, Nb, Mo, and W, with a doping amount of 1%, 0.5%, 0.5%, 0.125%, respectively | lithium boron compound, lithium titanate |
| Example 3 | LiNi_{0.8}Co_{0.1}Mn_{0.1i}O₂ | compounds of Zr, Nb, Mo, and Y, with a doping amount of 0.1%, 0.25%, 0.25%, 0.25%, respectively | lithium cobaltate, lithium boron compound |
| Example 4 | LiNi_{0.8}Co_{0.1}Mn_{0.1i}O₂ | compounds of Al, Zr, Nb, Mo, and Sr, with a doping amount of 1.0%, 0.5%, 0.25%, 0.25%, 0.1%, respectively | lithium manganite, lithium cobaltate, lithium boron compound |
| Example 5 | LiNi_{0.8}Co_{0.1}Mn_{0.1i}O₂ | compounds of Al, Zr, Nb, and F, with a doping amount of 2.0%, 1.0%, 0.25%, 0.25%, respectively | lithium titanium aluminum phosphate, lithium boron compound |
| Comparative Example 1 | LiNi_{0.8}Co_{0.1}Mn_{0.1}O₂ | None | None |
| Example 6 | LiNi_{0.8}Co_{0.1}Al_{0.1}O₂ | compounds of Zr, Nb, Mg and Ti, with a doping amount of 0.5%, 0.125%, 0.125%, 0.125%, respectively | lithium boron compound |
| Example 7 | LiNi_{0.8}Co_{0.1}Al_{0.1}O₂ | compounds of Ti, Nb, and Ce, with a doping amount of 0.1%, 0.1%, 0.1%, respectively | lithium cobaltate, lithium boron |
| | | | compound |
| Example 8 | LiNi_{0.8}Co_{0.1}Al_{0.1}O₂ | compounds of Pb, and V, with a doping amount of 0.25%, 0.25%, respectively | lithium manganite, lithium cobaltate, lithium boron compound |
| Example 9 | LiNi_{0.8}Co_{0.1}Al_{0.1}O₂ | compounds of Zr, Nb, and F, with a doping amount of 1.0%, 0.25%, 0.125%, respectively | lithium titanium aluminum phosphate, lithium boron compound |
| Comparative Example 2 | LiNi_{0.8}Co_{0.1}Al_{0.1}O₂ | None | None |

SEM and DSC tests are performed on the positive electrode active materials in Examples 1-9 and in Comparative Examples 1-2. The specific test methods are as follows.

### 1) DSC test

A. A positive electrode active material is mixed and slurried and coated on a positive electrode collector, dried and not rolled to obtain a positive electrode sheet; lithium sheet is used as a negative electrode sheet, and conventional lithium hexafluorophosphate is used as an electrolyte solution, and the positive electrode sheet, the negative electrode sheet and the electrolyte solution are assembled into a button cell;
B. The assembled button battery is charged at a voltage of 2.5-4.25V, the battery is disassembled, and the positive electrode sheet is cleaned using dimethyl carbonate (DMC) and dried;
C. The electrolyte solution is dripped on the positive electrode sheet, and the thermal decomposition curve is tested using a differential scanning calorimeter with a heating rate of 10°C/min to obtain the corresponding onset temperature, peak temperature, and enthalpy for thermal decomposition.

### 2) SEM test

The dried positive electrode sheet used for DSC test as described above is placed in a ceramic crucible and heated up to a preset temperature, i.e., the onset temperature and peak temperature of the positive electrode active material for DSC, as well as the onset temperature + 5°C, the peak temperature + 5°C, and the peak temperature + 10°C in a box furnace under an oxygen atmosphere at a heating rate of 10°C/min, and then cooled down to room temperature, made into small samples of 5 mm×5 mm, the morphology of which are observed using a SEM scanning electron microscope with a voltage set to 10.0 kv and a scale of 50 µm, the proportion of cracked secondary particles in the positive electrode active material is calculated by the calculation of the cracked secondary particles and all the secondary particles in the small samples.

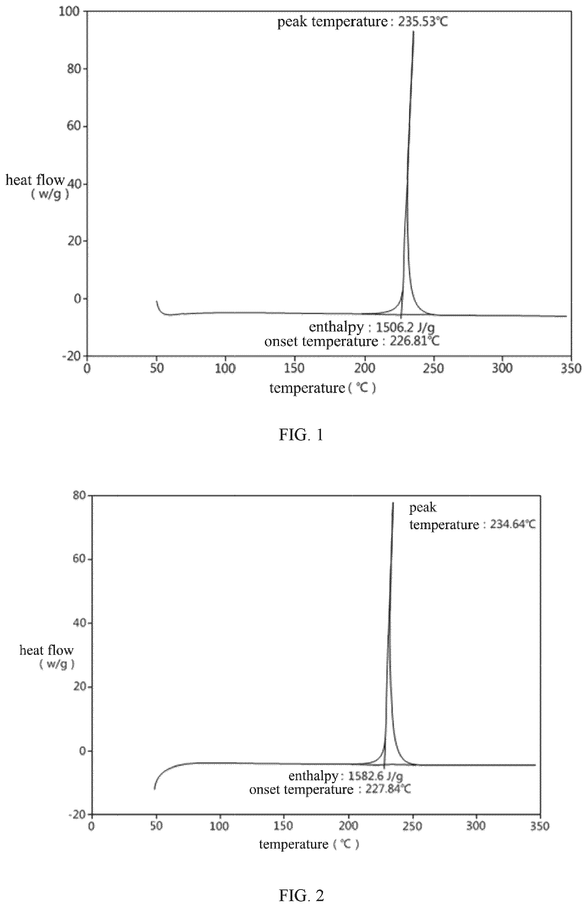

The test results of respective tests described above are listed in Table 2. FIG. 1 is a DSC diagram of the positive electrode active material provided in Example 5 of the present application; referring to FIG. 1, there is one exothermic peak between 200-250°C of the positive electrode active material in Example 5, and the onset temperature of the exothermic peak is 226.81°C, the peak temperature is 235.53°C. FIG. 2 is a DSC diagram of the positive electrode active material provided in Example 9 of the present application; referring to FIG. 2, there is one exothermic peak of the positive electrode active material between 200-250°C in Example 9, and the onset temperature of the exothermic peak is 227.84°C, and the peak temperature is 234.64°C.

Thermal runaway tests are performed on the batteries obtained by utilizing the positive electrode active materials prepared in Examples 1-9 as well as in Comparative Examples 1-2, and the results of the tests are listed in table 2.

**Table 2**

| **No.** | **DSC test** | | **SEM test** | | | | | **The difference of the proportion of cracked secondary particles at different temperatures** | | | | **autogenous heat temperature (°C)** | **thermal runaway triggering temperature (°C)** |
|---|---|---|---|---|---|---|---|---|---|---|---|---|---|
| | **t1 (°C )** | **T1 (°C)** | **x1 (%)** | **y1 (%)** | **X1 (%)** | **Y1 (%)** | **Y2 (%)** | **X1-x1 (%)** | **y1-x1 (%)** | **Y1-X 1 (%)** | **Y2-X 1 (%)** | | |
| Example **1** | **228.6** | **235.5** | **0.0** | **1.0** | **2.0** | **4.0** | **5.0** | **2.0** | **1.0** | **2.0** | **3.0** | **219.9** | **688.1** |
| Example **2** | **226.5** | **233.4** | **1.0** | **3.0** | **4.0** | **7.0** | **8.0** | **3.0** | **2.0** | **3.0** | **4.0** | **218.2** | **690.7** |
| Example **3** | **225.8** | **232.2** | **1.0** | **4.0** | **5.0** | **9.0** | **10.0** | **4.0** | **3.0** | **4.0** | **5.0** | **217.8** | **695.2** |
| Example **4** | **230.0** | **237.7** | **2.0** | **5.0** | **6.0** | **11.0** | **12.0** | **4.0** | **3.0** | **5.0** | **6.0** | **216.9** | **701.5** |
| Example **5** | **226.8** | **235.5** | **0.0** | **4.5** | **5.0** | **7.0** | **8.0** | **5.0** | **4.5** | **2.0** | **3.0** | **216.2** | **705.2** |
| Comparative Example **1** | **222.1** | **230.8** | **1.0** | **6.0** | **7.0** | **15.0** | **17.0** | **6.0** | **5.0** | **8.0** | **10.0** | **200.1** | **723.7** |
| Example **6** | **227.9** | **234.8** | **1.0** | **2.0** | **3.0** | **5.0** | **7.0** | **2.0** | **1.0** | **2.0** | **4.0** | **218.6** | **691.5** |
| Example **7** | **224.4** | **232.3** | **2.0** | **3.0** | **4.0** | **6.0** | **10.0** | **2.0** | **1.0** | **2.0** | **6.0** | **218.0** | **697.5** |
| Example **8** | **225.6** | **231.1** | **2.0** | **4.0** | **5.0** | **8.0** | **10.0** | **3.0** | **2.0** | **3.0** | **5.0** | **217.6** | **700.1** |
| Example **9** | **227.8** | **234.6** | **1.0** | **2.0** | **4.0** | **11.0** | **12.0** | **3.0** | **1.0** | **7.0** | **8.0** | **216.9** | **702.3** |
| Comparative Example **2** | **221.9** | **229.8** | **3.0** | **8.0** | **9.0** | **19.0** | **22.0** | **6.0** | **5.0** | **10.0** | **13.0** | **199.8** | **729.1** |

With the combination of the relevant data of Examples 1-9 and Comparative Examples 1-2 in Tables 1 and 2, it can be seen that after each of the positive electrode active materials in Examples 1-8 is doped with metal elements and coated with an ionic conductor layer; at the onset temperature t1 of the exothermic peak thereof, the proportion x1 of cracked secondary particles in the positive electrode active material is no more than 5%; at the peak temperature T1 of the exothermic peak thereof, the proportion X1 of cracked secondary particles in the positive electrode active material is no more than 10%; and 0% ≤ X1 - x1 ≤ 5%. After the onset temperature of the exothermic peak rises 5°C from T1 to T2, the proportion of cracked secondary particles in the positive electrode material increases by no more than 4%; after the peak temperature of the exothermic peak rises 5°C from T1 to T2, the proportion of cracked secondary particles in the positive electrode material increases by no more than 6%; after the peak temperature of the exothermic peak rises 10°C from T1 to T3, the proportion of cracked secondary particles in the positive electrode material increases by no more than 8%, and the proportion of cracked secondary particles in the positive electrode material at temperature T3 does not exceed 15%. The proportion of cracked secondary particles in the positive electrode active material in Comparative Examples 1-2 is 6% after the temperature is increased from the onset temperature to the peak temperature of the exothermic peak, and the proportion of cracked secondary particles increases substantially when the onset temperature and the peak temperature are increased. This indicates that the positive electrode active materials in Examples 1-8 have better thermal stability than the positive electrode active materials in Comparative Examples 1-2.

It can be seen from the data in Table 2 that the autogenous heat temperatures of the batteries prepared using the positive electrode active materials in Examples 1-9 are higher than the autogenous heat temperatures of the batteries in the Comparative Examples 1-2, and the thermal runaway triggering temperatures of the batteries prepared using the positive electrode active materials in Examples 1-9 are lower than the thermal runaway triggering temperatures of the batteries in the Comparative Examples 1-2. This indicates that batteries prepared using the positive electrode active materials, in which the proportion of cracked secondary particles is no more than 4%, have a higher degree of thermal safety when the onset temperature of the exothermic peak raises 5°C from t1 to t2.

It can be seen from the comparison of the data of Examples 1-4 and Example 5 in Table 2 that the autogenous heat temperature of the battery in Example 5 is lower than the autogenous heat temperatures of the batteries in Examples 1-4, and the thermal runaway triggering temperature is higher than the thermal runaway triggering temperatures of the batteries in Examples 1-4. This indicates that when the onset temperature of the exothermic peak rises 5° C from t1 to t2, the battery prepared by the positive electrode material, in which the proportion of cracked secondary particles is no more than 4%, has a higher thermal safety.

It can be seen from the comparison of the data of Examples 6-8 and Example 9 in Table 2 that the autogenous heat temperature of the battery in Example 9 is lower than the autogenous heat temperatures of the batteries in Examples 6-8, and the thermal runaway triggering temperature is higher than the thermal runaway triggering temperatures of the batteries in Examples 6-8. This indicates that when the peak temperature of the exothermic peak rises 5° C from T1 to T2, the battery prepared by the positive electrode material, in which the proportion of cracked secondary particles is no more than 6%, has a higher thermal safety.

The above are only specific embodiments of the present application, however, the protection scope of the present application is not limited thereto, and any changes or substitutions thought of by persons of ordinary skill in the art, who are familiar with the technical field, within the scope of the technology disclosed in the present application shall fall within the protection scope of the present application. Therefore, the protection scope of this application shall be subject to the protection scope of the claims.

## Claims

1. An positive electrode active material, wherein an exothermic peak is present between 200-250°C in a DSC graph of the positive electrode active material; at an onset temperature t1 of the exothermic peak, a proportion of cracked secondary particles in the positive electrode active material is x1; at a peak temperature T1 of the exothermic peak, the proportion of the cracked secondary particles in the positive electrode active material is X1; wherein the proportion of the cracked secondary particles is a ratio of the number of the cracked secondary particles to the number of all secondary particles in the positive electrode active material, 0%≤x1≤5%, 0%≤X1≤10%, 0%≤X1-x1≤5%.

2. The positive electrode active material according to claim 1, wherein at a temperature of t2, the proportion of the cracked secondary particles in the positive active material is y1, wherein t2=t1+5, 0%≤y1-xl≤4%.

3. The positive electrode active material according to claim 1, wherein at a temperature of T2, the proportion of the cracked secondary particles in the positive active material is Y1, wherein T2=T1+5, 0%≤Y1-X1≤6%.

4. The positive electrode active material according to claim 1, wherein at a temperature of T3, the proportion of the cracked secondary particles in the positive active material is Y2, wherein T3=T1+10, 0%≤Y2≤15%, 0%≤Y2-X1≤8%.

5. The positive electrode active material according to any one of claims 1 to 4, wherein the positive electrode active material has a general formula of Li₁₊ₐ[NiₓCo_{y}M_{z}M_{1b}]O₂, 0.5≤x<1 , 0<y<0.3, 0<z<0.3, 0<a<0.2, 0<b<0.2, and x+y+z+b = 1;
wherein M is one or both of Mn or Al; M₁ is one or a combination of at least two of Zr, Mg, Ti, Te, Al, Ca, Sr, Sb, Nb, Pb, V, Ge, Se, W, Mo, Zn, Ce, or Y.

6. The positive electrode active material according to claim 5, wherein the positive electrode active material further comprises a coating layer, the coating layer is an ionic conductor layer, and the ionic conductor layer is a metallic lithium compound or a non-metallic lithium compound.

7. The positive electrode active material according to claim 6, wherein the secondary particles of the positive electrode active material have an average particle size of 10 - 20 um.

8. A positive electrode slurry comprising the positive electrode active material according to any one of claims 1 to 7, a conductive agent, a bonding agent, and a solvent.

9. A positive electrode sheet comprising a positive electrode current collector and a positive electrode material layer disposed on the positive electrode current collector; the positive electrode material layer comprises the positive electrode active material according to any one of claims 1 to 7, or is prepared by coating the positive electrode slurry according to claim 8.

10. A secondary battery comprising the positive electrode sheet according to claim 9, a negative electrode sheet, an electrolyte provided between the positive electrode sheet and the negative electrode sheet.
